# EUROPÄISCHE PATENTSCHRIFT

(11) **EP 0 745 545 B1**
(45) Veröffentlichungstag und Bekanntmachung des Hinweises auf die Patenterteilung: **12.01.2000**
(21) Anmeldenummer: 96890073.8
(22) Anmeldetag: 23.04.1996
(51) Int. Cl.: B65G 21/04, B65G 39/20

(54) **Förderanlage zum Transport von Gütern mittels eines Förderbandes od. dgl.**
Conveyor device for products by means of a conveyor-belt or similar
Dispositif de transport pour produits au moyen d'une bande transporteuse ou similaire

(30) Priorität: 01.06.1995 AT 92995
(43) Veröffentlichungstag der Anmeldung: 04.12.1996
(73) Patentinhaber: KONRAD DOPPELMAYR & SOHN MASCHINENFABRIK GESELLSCHAFT M.B.H. & CO. KG., 6961 Wolfurt (AT)
(72) Erfinder: Trieb, Herbert, 6922 Wolfurt (AT)
(74) Vertreter: Atzwanger, Richard, Dipl.-Ing. Patentanwalt

(56) Entgegenhaltungen:
- DE-A- 3 426 106
- GB-A- 733 502
- US-A- 4 674 627

## Beschreibung

Die gegenständliche Erfindung betrifft eine Förderanlage zum Transport von Gütern mittels eines Förderbandes od.dgl. mit zwei voneinander im Abstand befindlichen Tragbahnen und mit einem in sich geschlossenen Förderband, weiches mit in Förderrichtung voneinander im Abstand befindlichen Balken od.dgl. ausgebildet ist, welche mit längs der Tragbahnen geführten Rollen versehen sind, wobei zwei übereinander befindliche Tragbahnen vorgesehen sind und die obere Tragbahn durch Tragseile gebildet ist, auf weiche das Gewicht des Förderbandes der oberen Förderbahn übertragen wird.

Bekannte derartige Förderanlagen bestehen aus einem in sich geschlossenen, an den beiden Enden über Umlenkwalzen geführten Förderband und unterhalb des oberen Trumes des Förderbandes angeordneten Tragwalzen, an welchen das Förderband zur Auflage kommt. Dabei muß das Förderband hinreichend zugfest ausgebildet sein, um einerseits die durch die Förderbewegung bedingten Zugkräfte und andererseits, die durch das Gewicht des Fördergutes auf dieses ausgeübten Zugkräfte aufzunehmen. Die durch das Gewicht des Fördergutes verursachten Zugkräfte des Förderbandes sind um so kleiner, je geringer der Abstand der sich unterhalb des oberen Trumes des Förderbandes befindlichen Tragwalzen ist.

Da weiters bei bekannten derartigen Förderanlagen die Tragwalzen gegenüber dem Förderband nicht nur abrollen, sondern das Förderband auch über die Tragwalzen gleitet, wird auch hierdurch eine hohe Zugbelastung des Förderbandes bedingt. Zudem wird hierdurch eine Abnützung des Förderbandes verursacht.

Bei bekannten derartigen Förderanlagen besteht somit das Erfordernis, entweder das Förderband mit einer sehr hohen Zugfestigkeit auszubilden, wobei sich die Tragwalzen in großem Abstand voneinander befinden können, wodurch über die gesamte Lange der Fördervorrichtung eine verringerte Anzahl von Förderwalzen vorgesehen werden kann, oder eine große Anzahl von Tragwalzen vorzusehen, welche in einem geringen Abstand voneinander vorgesehen sind. Hierdurch werden zwar die durch das Gewicht des Fördergutes verursachten Zugbelastungen des Förderbandes verringert, wodurch dieses mit einer geringeren Zugfestigkeit ausgebildet werden kann. Da jedoch eine große Anzahl von Tragwalzen vorgesehen werden muß, wird hierdurch der konstruktive Aufwand vergrößert.

Aus der DE 34 26 106 A1 ist weiters eine Förderanlage bekannt, welche mit zwei Förderbahnen ausgebildet ist, wobei die obere Förderbahn durch zwei Tragseile und die untere Förderbahn durch Tragwalzen gebildet ist. Diese bekannte Förderanlage entspricht jedoch deshalb nicht den an sie gestellten Anforderungen, da das Förderband nur einen geringen Neigungswinkel gegenüber der Horizontalen aufweisen darf, da andernfalls das Fördergut auf dem Förderband abgleiten würde. Zudem sind die längs der unteren Förderbahn angeordneten Tragwalzen deshalb nachteilig, da sie an ihren Lagerstellen einer Wartung, z.B. einer Schmierung, bedürfen bzw. nur dort ausgetauscht werden können. Demgegenüber können Rollen, welche sich längs der Tragbahnen bewegen, an beliebigen Stellen der Tragbahn gewartet bzw. ausgetauscht werden.

Der gegenständlichen Erfindung liegt demnach die Aufgabe zugrunde, die dem bekannten Stand der Technik anhaftenden Nachteile zu vermeiden. Dies wird erfindungsgemäß dadurch erzielt, daß die Rollen an den seitlichen Enden des Balkens vorgesehen sind und das Förderband od.dgl. an der Unterseite der Balken od.dgl. befestigt ist, wodurch es durch die Balken od.dgl. in einzelne Abschnitte unterteilt ist und daß beide Tragbahnen durch Tragseile gebildet sind, wodurch die Rollen in beiden Bewegungsrichtungen auf den Tragseilen abrollen und das Gewicht des Förderbandes auf die Tragseile übertragen.

Vorzugsweise ist das Förderband als Wellkantenförderband ausgebildet, dessen Bodenfläche an den Unterseiten der Balken befestigt ist, wobei die Enden der Wellkanten der zwischen den einzelnen Balken o.dgl. befindlichen Abschnitte an den Seitenflachen der Balken od.dgl. befestigt sind. Weiters können die Rollen an den beiden seitlichen Enden der Balken od.dgl. gelagert sein. Zudem kann die Höhe der Balken od.dgl. angenähert gleich der Höhe der Wellkanten sein.

Vorzugsweise sind an den Enden des Förderbandes Leitschienen vorgesehen, durch welche das obere Paar der Tragseile nach außen geführt und zugleich mit dem unteren Paar der Tragseile über eine Abspanntrommel gelegt ist.

Durch eine derartige Förderanlage tritt nur ein Abrollen der Rollen gegenüber den Tragbahnen auf, wodurch die Zugbelastung des Förderbandes verringert wird, sodaß dieses mit einer geringeren Zugfestigkeit ausgebildet werden kann. Da zudem das Förderband nicht über Tragwalzen gleitet, unterliegt es keiner Abnützung. Ein weiterer Vorteil besteht darin, daß die Rollen, weiche einer Wartung bedürfen bzw. einer Abnützung unterliegen, periodisch zu den Endstationen der Förderanlage gelangen, wodurch eine stationäre Wartung bzw. ein stationärer Einsatz möglich ist. Somit besteht kein Erfordernis, über die Länge der Förderanlage Wartungsarbeiten durchzuführen bzw. einen Austausch von Bestandteilen vorzunehmen.

Eine erfindungsgemäß Förderanlage ist nachstehend anhand eines in der Zeichnung dargestellten Ausführungsbeispieles näher erläutert. Es zeigen:
- Fig. 1.: ein Ende einer Förderanlage, in Seitenansicht,
- Fig. 2: ein Detail dieser Förderanlage, in Seitenansicht und in Förderrichtung gesehen,
- Fig. 4: diese Förderanlage, in einem außerhalb einer Tragstütze geführten vertikalen Schnitt, und
- die Fig. 5a und 5 b: einen Abschnitt dieser Förderanlage außerhalb einer Tragstütze, in Seitenansicht und in Draufsicht.

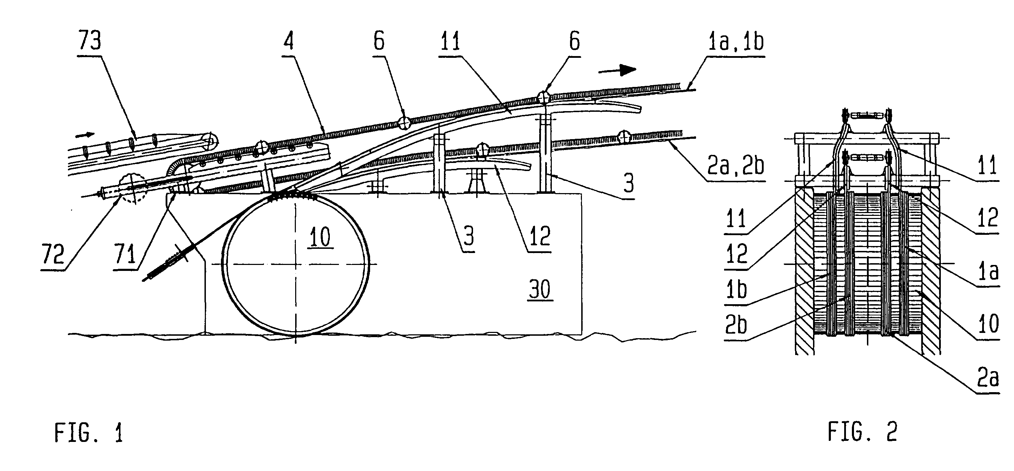

Wie dies aus Fig. 1 ersichtlich ist, weist eine erfindungsgemäße Förderanlage zwei in unterschiedlichen Höhenlagen befindliche Paare von Tragseilen 1a, 1b und 2a, 2b auf, welche sich über die gesamte Länge der Förderanlage erstrecken und weiche nach Art eines Tragseiles einer Seilbahnanlage von Stützen 3 getragen und an den Enden der Förderanlage im Boden oder in einem Sockel od.dgl. fest verankert sind.

Den beiden Paaren von Tragseilen 1a, 1b und 2a, 2b ist ein in sich geschlossenes Förderband 4 zugeordnet, welches an den Enden der Förderanlage über Umlenkwalzen 41 geführt ist, wobei mindestens eine der Umlenkwalzen 41 angetrieben ist. Zudem ist eine Spanneinrichtung 42 für das Förderband 4 vorgesehen. Am Beginn der Förderanlage ist eine Zufördereinrichtung 43 vorgesehen, über welche das Fördergut auf das Förderband 4 aufgebracht wird.

Das Förderband 4 ist seitlich mit Rollen 6 ausgebildet, welche an den Enden der Förderanlage auf die Tragseile 1a, 1b bzw. 2a, 2b auflaufen bzw. sich von diesen abheben, wogegen sie über die gesamte restliche Förderanlage auf den Tragseilen 1a, 1b und 2a, 2b laufen und hierdurch von diesen abgestützt werden. Hierdurch wird die vom Gewicht des Fördergutes aufgebrachte Belastung von den Tragseilen 1a, 1b und 2a, 2b aufgenommen, wodurch das Förderband 4 entsprechend entlastet wird. Zudem tritt ausschließlich eine Abrollbewegung auf.

An den Enden der Förderanlage sind die Förderseile 1a, 1b und 2a, 2b über Leitschienen 11 und 12 gelegt, mehrfach über eine Abspanntrommel 10 gewunden und in einem Sockel 30 verankert. Da in diesem Bereich der Förderanlage die Bewegungsbahn des Förderbandes 4 die Leitschienen 11 kreuzt, sind die Leitschienen 11, wie dies aus Fig. 2 ersichtlich ist, seitlich nach außen geführt.

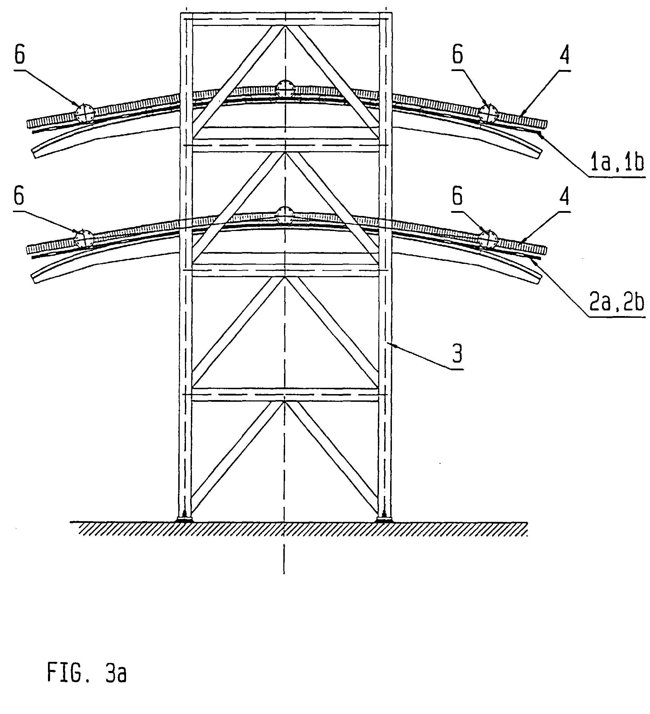

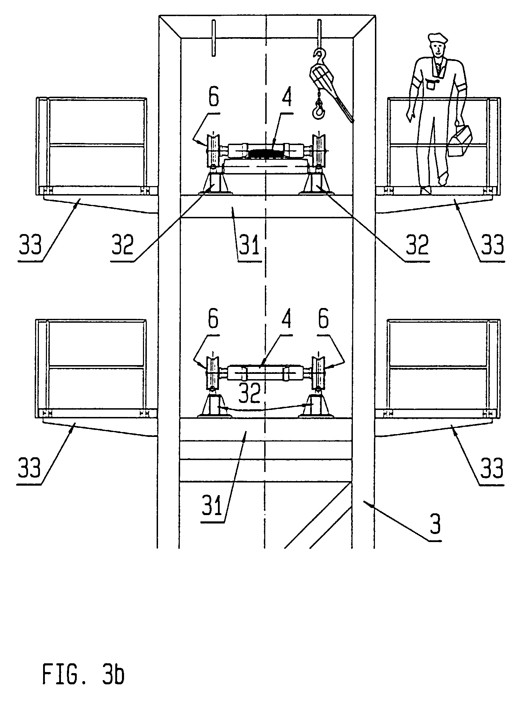

In den Fig. 3a und 3b ist eine Tragstütze 3 dargestellt. Wie aus Fig. 3b ersichtlich ist, sind die Tragstützen 3 in unterschiedlichen Höhenlagen mit zwei Querstreben 31 ausgebildet, an welchen Tragböcke 32, welche der Unterstützung der Tragseile 1a, 1b und 2a, 2b dienen, angeordnet sind. Zudem können an den Tragstützen 3 Plattformen 33 vorgesehen sein, welche Montage- und Wartungsarbeiten dienen.

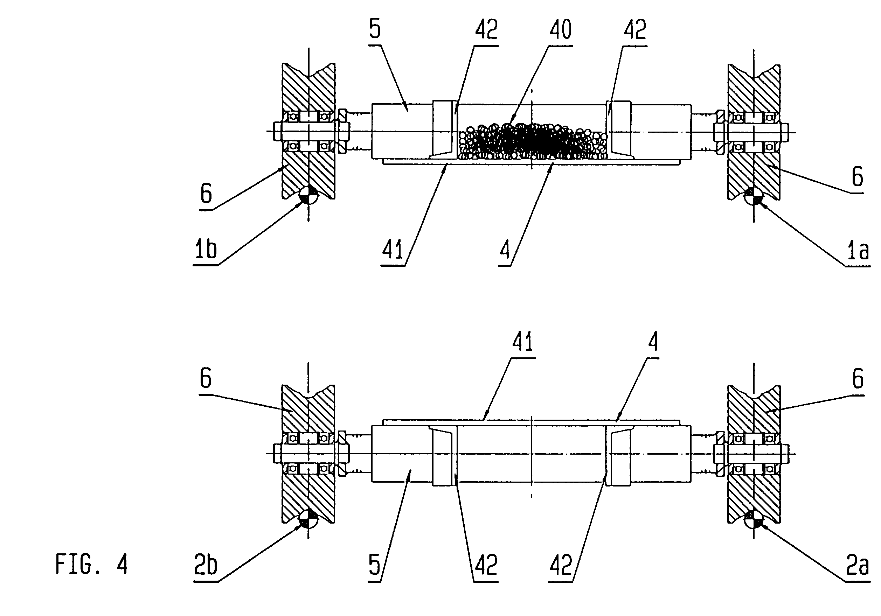

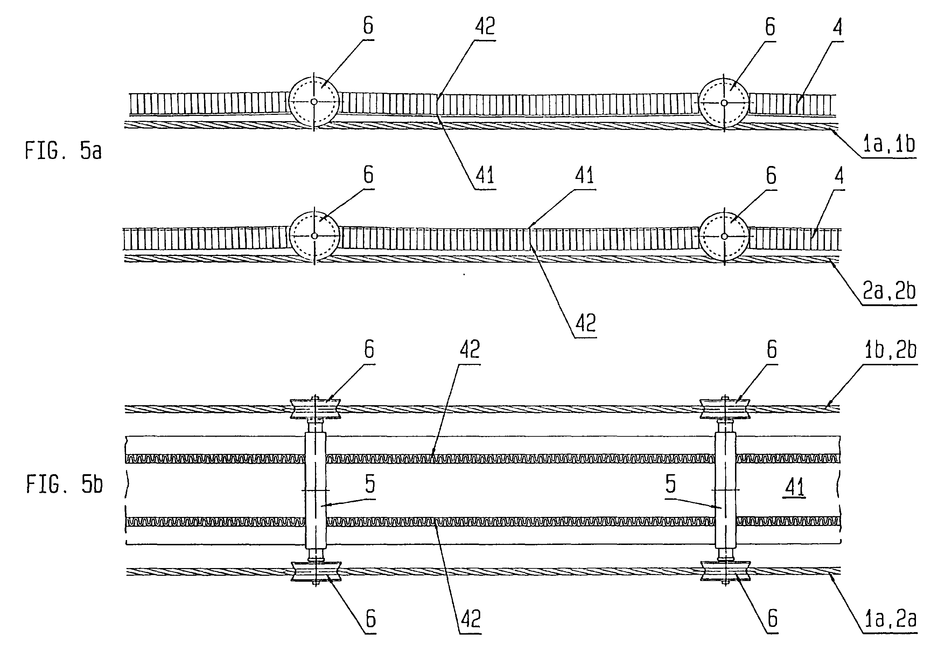

In den Fig. 4 und den Fig. 5a und 5b ist die Ausbildung des Förderbandes 4 und der Tragrollen 6 genauer dargestellt. Über den Verlauf des Förderbandes 4 sind von einander im Abstand befindliche Balken 5 vorgesehen, an deren Unterseite die Bodenfläche 41 des Förderbandes 4 befestigt ist und an deren Seitenflächen die sich seitlich des Förderbandes 4 erstreckenden Wellkanten 42 des Förderbandes 4 befestigt sind. An den freien Enden der Balken 5 sind die Rollen 6 gelagert, welche längs der Tragseile 1a, 1b und 2a, 2b abrollen. Auf dem Förderband 4 befindet sich das Fördergut 40.

Da der überwiegende Teil der durch das Fördergut 40 auf das Förderband 4 ausgeübten Belastung auf die Tragseile 1 und 2 übertragen wird, und da nur geringe Rollreibungen verursacht werden, braucht durch das Förderband 4 nur die für dessen Bewegung erforderliche Zugkraft aufgenommen zu werden. Weiters ist das Förderband mit Tragrollen ausgebildet, welche auf den der Tragseilen verfahrbar sind, wodurch die durch das Fördergut verursachten Belastungen nicht vom Förderband aufgenommen zu werden brauchen. Hierdurch können Förderanlagen mit sehr großen Längen gefertigt werden.

## Patentansprüche

1. Förderanlage zum Transport von Gütern mittels eines Förderbandes (4) od.dgl. mit zwei voneinander im Abstand befindlichen Tragbahnen und mit einem in sich geschlossenen Förderband (4), welches mit in Förderrichtung voneinander im Abstand befindlichen Balken (5) od.dgl. ausgebildet ist, welche mit längs der Tragbahnen geführten Rollen (6) versehen sind, wobei zwei übereinander befindliche Tragbahnen vorgesehen sind und die obere Tragbahn durch Tragseile (1a, 1b) gebildet ist, auf welche das Gewicht des Förderbandes (4) der oberen Förderbahn übertragen wird, dadurch gekennzeichnet, daß die Rollen an den seitlichen Enden des Balkens vorgesehen sind und das Förderband (4) od.dgl. an der Unterseite der Balken (5) od.dgl. befestigt ist, wodurch es durch die Balken (5) od.dgl. in einzelne Abschnitte unterteilt ist und daß beide Tragbahnen durch Tragseile (1a, 1b; 2a, 2b) gebildet sind, wodurch die Rollen (6) in beiden Bewegungsrichtungen auf den Tragseilen (1a, 1b; 2a, 2b) abrollen und das Gewicht des Förderbandes (4) auf die Tragseile 1a, 1b; 2a, 2b) übertragen.

2. Vorrichtung nach Patentanspruch 1, dadurch gekennzeichnet, daß das Förderband (4) als Wellkantenförderband ausgebildet ist, dessen Bodenfläche (41) an den Unterseiten der Balken (5) od.dgl. befestigt ist, wobei die Enden der Wellkanten der zwischen den einzelnen Balken (5) befindlichen Abschnitte an den Seitenflächen der Balken (5) od.dgl. befestigt sind.

3. Vorrichtung nach einem der Patentansprüche 1 und 2, dadurch gekennzeichnet, daß die Rollen (6) an den beiden seitlichen Enden der Balken (5) od.dgl. gelagert sind.

4. Vorrichtung nach einem der Patentansprüche 1 bis 3, dadurch gekennzeichnet, daß die Höhe der Balken (5) od.dgl. angenähert gleich der Höhe der Wellkanten (42) ist.

5. Vorrichtung nach einem der Patentansprüche 1 bis 4, dadurch gekennzeichnet, daß an den Enden des Förderbandes (4) Leitschienen (11, 12) vorgesehen sind, durch welche das obere Paar (1a, 1b) der Tragseile nach außen geführt und zugleich mit dem unteren Paar (2a, 2b) der Tragseile über eine Abspanntrommel (10) gelegt ist.

## Claims

1. A conveying system for transporting goods by means of a conveyor belt (4) or the like, having two spaced carrier tracks and a continuous conveyor belt (4), which exhibits crossbeams (5) or the like spaced from each other in the conveying direction, which crossbeams (5) are provided with rollers (6) guided along the carrier tracks, two carrier tracks being provided which are located one above the other and the upper carrier track consisting of carrier cables (1a, 1b), to which the weight of the conveyor belt (4) of the upper conveyor track is transmitted, characterised in that the rollers are provided at the lateral ends of the crossbeams and the conveyor belt (4) or the like is secured to the underside of the crossbeams (5) or the like, whereby it is subdivided into individual portions by the crossbeams (5) or the like and in that both carrier tracks are take the form of carrier cables (1a, 1b; 2a, 2b), whereby the rollers (6) roll on the carrier cables (1a, 1b; 2a, 2b) in both directions of movement and transmit the weight of the conveyor belt (4) to the carrier cable (1a, 1b; 2a, 2b).

2. A device according to claim 1, characterised in that the conveyor belt (4) takes the form of a corrugated edge conveyor belt, the bottom surface (41) of which is secured to the undersides of the crossbeams (5) or the like, the ends of the corrugated edges of the portions located between the individual crossbeams (5) being secured to the side faces of the crossbeams (5) or the like.

3. A device according to one of claims 1 and 2, characterised in that the rollers (6) are mounted at the two lateral ends of the crossbeams (5) or the like.

4. A device according to one of claims 1 to 3, characterised in that the height of the crossbeams (5) or the like is approximately equal to the height of the corrugated edges (42).

5. A device according to one of claims 1 to 4, characterised in that guide bars (11, 12) are provided at the ends of the conveyor belt (4), by means of which the upper pair (1a, 1b) of carrier cables is guided outwards and positioned over an end-tensioning drum (10) together with the lower pair (2a, 2b) of carrier cables.

## Revendications

1. Installation de transport pour le transport de produits au moyen d'une bande de transport (4) ou similaire, comportant deux voles porteuses espacées l'une de l'autre ainsi qu'une bande de transport (4) fermée en soi, qui comporte des poutres (5) ou similaires qui sont espacées l'une de l'autre dans la direction de transport et qui sont pourvues de roues (6) guidées le long des voies porteuses, deux voies porteuses superposées étant prévues et la voie porteuse supérieure étant formée par des câbles porteurs (1a, 1b) auxquels est transmis le poids de la bande de transport (4) de la voie de transport supérieure, caractérisée en ce que les roues sont prévues aux extrémités latérales de la poutre et la bande de transport (4) ou similaire est fixée a la face inférieure des poutres (5) ou similaires, ce qui fait qu'elle est divisée par les poutres (5) ou similaires en tronçons individuels et que les deux voies porteuses sont formées par des câbles porteurs (1a, 1b ; 2a, 2b), ce qui fait que les roues (2) roulent dans deux sens de déplacement sur les câbles porteurs (1a, 1b ; 2a, 2b) et que le poids de la bande de transport (4) est transmis aux câbles porteurs (1a, 1b ; 2a, 2b).

2. Dispositif selon la revendication 1, caractérisé en ce que la bande de transport (4) est réalisée sous la forme d'une bande de transport à bords ondulés dont la surface de fond (41) est fixée aux faces inférieures des poutres (5) ou similaires tandis que les extrémités des bords ondulés des tronçons, qui se trouvent entre les différentes poutres (5), sont fixées aux faces latérales des poutres (5) ou similaires.

3. Dispositif selon l'une des revendications 1 ou 2, caractérisé en ce que les roues (6) sont montées aux deux extrémités latérales des poutres (5) ou similaires.

4. Dispositif selon l'une des revendications 1 à 3, caractérisé en ce que la hauteur des poutres (5) ou similaires est à peu près égale à la hauteur des bords ondulés (42).

5. Dispositif selon l'une des revendications 1 à 4, caractérisé en ce qu'aux extrémités de la bande de transport (4) sont prévus des rails de guidage (11, 12), par lesquels la paire supérieure (1a, 1b) des câbles porteurs est guidée vers l'extérieur et est placée en même temps avec la paire inférieure (2a, 2b) des câbles porteurs, sur un tambour de tension (10).
